# EUROPEAN PATENT APPLICATION

(11) **EP 1 237 214 A2**
(43) Date of publication of application: **04.09.2002**
(21) Application number: 02004654.6
(22) Date of filing: 28.02.2002
(51) Int. Cl.: H01M 4/96, H01M 4/86, D03D 15/00, H01M 8/02

(54) **Conductive carbonaceous-fiber sheet and solid polymer electrolyte fuel cell**

(30) Priority: 28.02.2001 JP 2001053855
(71) Applicant: MITSUBISHI CHEMICAL CORPORATION, Chiyoda-ku, Tokyo 100-0005 (JP)
(72) Inventor: Hirahara, Satoshi, Yohohama-shi, Kanagawa 227-8502 (JP); Suzuki, Mitsuo, Yohohama-shi, Kanagawa 227-8502 (JP)
(74) Representative: VOSSIUS & PARTNER

(57) **Abstract**

A conductive carbonaceous-fiber sheet has a thickness of from 0.05 to 1 mm, a weight per a unit area of from 60 to 250 g/m², a bending resistance (L) as determined by the 45° Cantilever method of 6 cm or higher and an in-plane volume resistivity of 0.2 Ωcm or lower, and is suitable for use as a gas diffusion layer in a solid polymer electrolyte fuel cell.

## Description

The present invention relates to a conductive carbonaceous-fiber sheet comprising carbonaceous fibers. The carbonaceous-fiber sheet of the invention has excellent electrical conductivity and gas permeability and moderate stiffness and is hence suitable for use as a gas diffusion layer material for solid polymer electrolyte fuel cells and in power sources for motor vehicles and power sources for cogeneration power systems.

Considerable efforts are recently being made to develop fuel cells. The fuel cells which are being developed are classified into alkaline fuel cells, phosphoric acid fuel cells, molten carbonate fuel cells, solid oxide fuel cells, solid polymer electrolyte fuel cells, and others according to the kinds of the electrolytes used. Among these, solid polymer electrolyte fuel cells are attracting attention as power sources for electric cars and domestic power sources because they can be operated at low temperatures, are easy to handle, and attain a high output density. Investigations are being further made on the application of such fuel cells to a cogeneration system in which the heat evolved during power generation is utilized for heating, hot-water supply, etc. to thereby improve the overall heat efficiency.

The main constituent members of each single cell in a solid polymer electrolyte fuel cell include a membrane electrode and ribbed separators. The membrane electrode is constituted basically of a solid polymer electrolyte membrane (ion-exchange membrane) and a catalyst layer, gas diffusion layer, and current collector bonded in this order to each side of the electrolyte membrane. Each catalyst layer consists mainly of a mixture of a catalyst and carbon black. There are cases where the gas diffusion layers function also as current collectors. Sandwiching this membrane electrode between ribbed separators give a single cell of a solid polymer electrolyte fuel cell.

Such a solid polymer electrolyte fuel cell works by the following mechanism. A fuel (hydrogen gas) and an oxidizing agent (oxygen-containing gas) are fed respectively to the anode-side catalyst layer and the cathode-side catalyst layer through the grooves of the ribbed separators to cause cell reactions. The resultant flow of electrons generated through the membrane electrode is taken out as an electrical energy. In order for the fuel cell to work efficiently by this mechanism, it is necessary to smoothly and evenly feed a fuel and an oxidizing agent to the membrane electrode. It is also important that the solid electrolyte membrane located at the center of the membrane electrode should retain a moderate amount of water so as to have proton conductivity, and that the water which generates as a result of the cell reactions should be smoothly discharged therefrom.

Mainly used for producing a membrane electrode are: a method comprising bonding catalyst layers to a solid electrolyte membrane to form a multilayer structure and then bonding gas-diffusing current collectors to that structure; and a method comprising bonding gas-diffusing current collectors respectively to catalyst layers to form multilayer structures and then bonding these structures to a solid electrolyte membrane.

Carbon papers are mainly used as a material of the gas diffusion layers (sometimes functioning also as current collectors). Although many processes for carbon paper production are known (see, for example, Japanese Patent Laid-Open Nos. 25808/1975, 236664/1986, 236665/1986, and 27969/1989), all the carbon papers produced by the known processes are constituted of a carbonaceous material, e.g., short carbon fibers, bonded with a binder. Due to this constitution, the thickness-direction electrical conductivity thereof is lower than the in-plane electrical conductivity thereof, although the in-plane conductivity is satisfactory. With respect to mechanical properties, those carbon papers have high stiffness but are relatively brittle and poorly elastic. Because of the brittleness, when such a carbon paper is used in fabricating a solid polymer electrolyte fuel cell and a pressure is applied thereto so as to reduce electrical resistance at contact points, then the carbon paper is apt to break, resulting in reduced rather than increased electrical conductivity. Furthermore, the carbon papers have insufficient gas permeability in in-plane directions although satisfactory in thickness-direction gas permeability. Because of this, use of the carbon paper as a gas diffusion layer has a drawback that the gas which is being fed through the grooves of a ribbed separator is inhibited from diffusing in transverse directions, leading to a decrease in cell performance.

Investigations are being made also on the use of a carbonaceous-fiber woven fabric made by weaving carbonaceous fibers as a substitute for the carbon papers. Carbonaceous-fiber woven fabrics have many advantages over the carbon papers, e.g., freedom from mechanical brittleness, high gas permeability, and the ability to have elasticity also in the thickness direction according to the constitution of carbonaceous fibers or weave construction. However, these woven fabrics are pliable and hence have the following problems. When a membrane electrode employing carbonaceous-fiber woven fabrics as gas diffusion layers is combined with ribbed separators so as to fabricate a fuel cell, the woven fabrics partly come into the grooves of the ribbed separators and thereby inhibit gas flow through the grooves. Furthermore, since the contact points between fibers are not fixed in the carbonaceous-fiber woven fabrics, electrical resistance in these points is unstable and this tends to result in unstable electrical resistance of the woven fabric as a whole.

Many proposals have been made on techniques for eliminating those problems of carbonaceous-fiber woven fabrics. For example, Japanese Patent Laid-Open No. 165254/1983 discloses a technique in which pores of a carbonaceous-fiber woven fabric are filled with a mixture of a fluororesin and carbon black. Japanese Patent Laid-Open No. 261421/1998 discloses a technique in which a layer comprising a fluororesin and carbon black is formed on a surface of a carbonaceous-fiber woven fabric. However, these techniques have a drawback that they reduce gas-diffusing properties, which are an advantage of carbonaceous-fiber woven fabrics.

Accordingly, an object of the invention is to provide a conductive carbonaceous-fiber sheet which retains the inherent advantages of carbonaceous-fiber woven fabrics and has high stiffness and a stable electrical conductivity.

The invention provides a conductive carbonaceous-fiber sheet which has a thickness of from 0.05 to 1 mm, a weight per a unit area of from 60 to 250 g/m², a bending resistance (L) as determined by the 45° Cantilever method of 6 cm or higher, and an in-plane volume resistivity of 0.2 Ωcm or lower.

The conductive carbonaceous-fiber sheet, which has such properties, can be produced by fusing carbonaceous fibers to one another or by bonding carbonaceous fibers to one another with such a small amount of a binder or a product of carbonization thereof as not to impair the gas permeability and other advantages inherent in woven fabrics.

Fig. 1 is a scanning electron photomicrograph of the conductive carbonaceous-fiber woven fabric obtained in Example 6, the magnification being 5,000 diameters;

Fig. 2 is a scanning electron photomicrograph of the conductive carbonaceous-fiber woven fabric obtained in Example 8, the magnification being 5,000 diameters;

Fig. 3 is a view diagrammatically illustrating a Cantilever softness tester for use in a bending resistance test by the 45° Cantilever method in accordance with JIS L 1096; and

Fig. 4 is a view diagrammatically illustrating a Clark softness tester for use in the Clark bending resistance test in accordance with JIS L 1096.

The conductive carbonaceous-fiber sheet of the invention should have a thickness, weight per a unit area, bending resistance as determined by the 45° Cantilever method, and in-plane volume resistivity in the respective specific ranges.

The thickness of the conductive carbonaceous-fiber sheet is from 0.05 to 1 mm. In case where the thickness of the sheet is smaller than 0.05 mm, the sheet has too low a tensile strength and it is difficult to secure a bending resistance as determined by the 45° Cantilever method of 6 cm or higher. Conversely, in case where the thickness of the sheet exceeds 1 mm, the sheet has reduced gas-diffusing properties. Moreover, use of such too thick a sheet in fuel cell fabrication gives a membrane electrode which is too bulky and, hence, results in a fuel cell having a reduced output per unit volume. The thickness of the conductive carbonaceous-fiber sheet is preferably from 0.1 to 0.5 mm.

The weight per a unit area of the conductive carbonaceous-fiber sheet is generally 60 g/m² or more, preferably 80 g/m² or more, more preferably 120 g/m² or more, most preferably 130 g/m² or more, and is generally 250 g/m² or less, preferably 200 g/m² or less, more preferably 170 g/m² or less. In case where the weight per a unit area of the sheet is less than 60 g/m², the sheet necessarily is too thin and hence poses problems described above. In case where the weight per a unit area thereof exceeds 250 g/m², the sheet is too bulky or is too dense and has reduced gas-diffusing properties.

The bending resistance (L) of the conductive carbonaceous-fiber sheet, as determined by the 45° Cantilever method, should be 6 cm or higher. The bending resistance (L) determined by the 45° Cantilever method, which is provided for in JIS L 1096, is a measure of the pliability (stiffness/pliability) of woven fabrics.

Specifically, the measurement of bending resistance (L) by the 45° Cantilever method is made in the following manner.

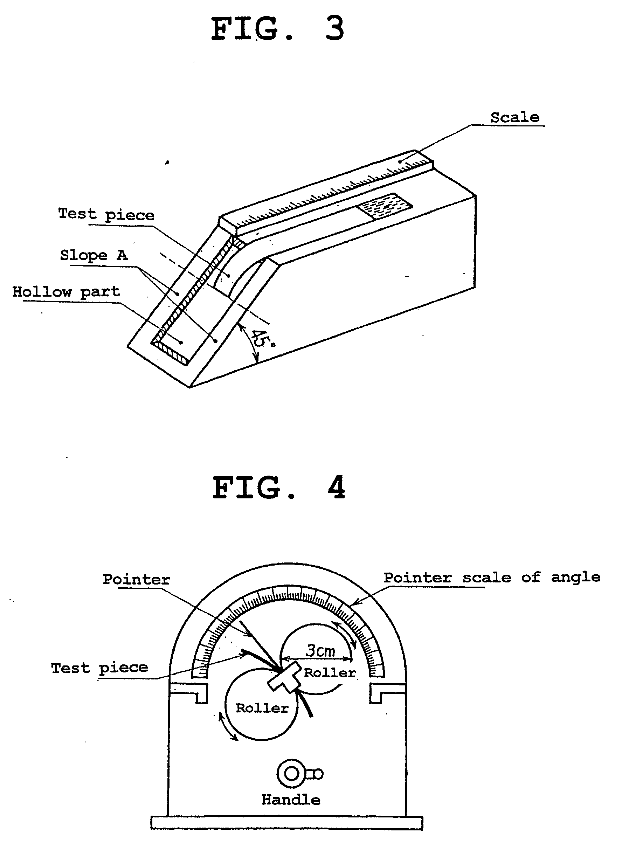

A cut test piece having dimensions of 2 cm by about 15 cm is placed on a horizontal table which has a smooth surface and one side of which has an inclination of 45 degrees, in such a manner than one of the short sides of the test piece is located on the base line of the scale as shown in Fig. 3. Subsequently, the test piece is gradually slipped toward the slope. At the time when the center of the front-side end of the test piece comes into contact with the slope, the position of the other end is determined with the scale. According to this 45° Cantilever method, the bending resistance is expressed in terms of the length over which the test piece has been moved.

Ordinary carbonaceous-fiber woven fabrics are pliable, and the woven fabrics with thicknesses in the range of from 0.05 to 1 mm generally have a bending resistance (L) of 5 cm or lower. The invention has succeeded in increasing the bending resistance (L) by mutually fusing or bonding the fibers constituting a conductive carbonaceous-fiber sheet. The bending resistance (L) of the carbonaceous-fiber sheet of the invention is preferably 8 cm or higher.

The Japanese Industrial Standards include a statement to the effect that the maximum value of bending resistance (L) as determined by the 45° Cantilever method is about 15 cm. However, values of bending resistance (L) up to 30 cm are generally thought to be allowable as an index of stiffness satisfying the JIS. The upper limit of the stiffness of the conductive carbonaceous-fiber sheet of the invention is usually about 25 cm in terms of the bending resistance (L) as determined by the 45° Cantilever method. In JIS L 1096, the Clark method is described as a method for evaluating the stiffness of samples having higher stiffness than those suitable for evaluation by the 45° Cantilever method.

In the Clark method, the Clark softness tester shown in Fig. 4 is used to examine a cut test piece having dimensions of 2 cm by 15 to 25 cm. The test piece is sandwiched between the two rollers, and the handle is rotated left-handedly and right-handedly. The length over which the test piece protrudes from the rollers is regulated so that the sum of the left and right angles shown on the pointer scale of angle when the test piece declines to the left and the right becomes 90° ± 2°. This length is measured.

The maximum value of bending resistance (L) as determined by the Clark method is about 25 cm according to JIS. However, as in the case of the 45° Cantilever method, values of bending resistance (L) up to 40 cm, as determined by the Clark method, are generally thought to be allowable as an index of stiffness satisfying the JIS. The upper limit of the stiffness of the conductive carbonaceous-fiber sheet of the invention, in terms of the bending resistance (L) as determined by the Clark method, is about 35 cm.

In the case where a carbonaceous-fiber sheet having too high stiffness is uses as a gas diffusion layer material for fuel cells, the sheet is difficult to wind into a roll and, hence, tends to have reduced handleability and reduced transportability. Productivity also is apt to decease. Samples having higher stiffness (hardness) than those suitable for evaluation by the Clark method can be evaluated based on values of flexural modulus obtained through a flexural rigidity test with an Orzen type tester. Woven fabrics having values of this flexural modulus exceeding 1x10⁴ kgf/cm² are unsuitable for the invention although this upper limit varies slightly depending on the thickness thereof, because such too rigid woven fabrics may break upon winding depending on roll diameter. For example, a conductive woven fabric which is so stiff as to crack upon winding around a roll having an outer diameter of 10 cm can not substantially be used as a gas diffusion material for fuel cells and is hence unsuitable for the invention. However, conductive woven fabrics which have such a degree of stiffness that the bending resistance (L) as determined by the 45° Cantilever method is up to about 25 cm and the bending resistance (L) as determined by the Clark method is up to about 35 cm are suitable for winding even around a core having a diameter of 3 inches (76 mm) and are hence suitable for practical use.

Lower in-plane volume resistivities are preferred for the conductive carbonaceous-fiber sheet of the invention because the gas diffusion layers each constituted of the sheet serve as part of passages for the electrons generated in the catalyst layers of the membrane electrode. However, the sheet is sufficient for practical use as long as the in-plane volume resistivity is 0.2 Ωcm or lower, especially 0.1 Qcm or lower. The volume resistivity thereof is preferably 0.07 Ωcm or lower, more preferably 0.06 Qcm or lower.

The conductive carbonaceous-fiber sheet of the invention has an advantage that it retains the gas-diffusing properties inherent in carbonaceous-fiber woven fabrics. The gas-diffusing properties of the sheet are generally from 50 to 150 cm³/cm²·sec, preferably from 60 to 130 cm³/cm²·sec, especially to 120 cm³/cm²·sec, in terms of air permeability as measured in accordance with JIS L 1096, air permeability test (method A).

In case where the air permeability of the sheet as measured by the method exceeds 150 cm³/cm²·sec, the sheet undesirably has reduced water-holding properties although it has sufficient gas permeability, which is required of gas diffusion materials for polymer electrolyte membrane fuel cells (PEMFCs). On the other hand, in case where the air permeability of the sheet is lower than 50 cm³/cm²·sec, this sheet, when used in high-output applications where a high current should be produced in a moment, such as, e.g., PMMFCs for motor vehicles, shows insufficient gas permeation and tends to result in reduced cell performance, although it may be used in low-output PEMFCs.

As the carbonaceous fibers constituting the conductive carbonaceous-fiber sheet of the invention can be used any desired carbonaceous fibers selected from polyacrylonitrile-based, pitch-based, cellulose-based, polynosic-based, and other known carbonaceous fibers. Usually, pitch-based or polyacrylonitrile-based carbonaceous fibers are used. Preferred of these are polyacrylonitrile-based carbonaceous fibers. The polyacrylonitrile-based carbonaceous fibers are available in various grades according to the proportion of acrylonitrile units in the raw material. Examples of the fibers include ones formed from polyacrylonitrile having almost 100% acrylonitrile unit content, ones formed from acrylonitrile-based polymers having an acrylonitrile unit content of 50% or higher, and ones formed from acrylonitrile polymers having an acrylonitrile unit content of from 20 to 50%. Carbonaceous fibers obtained from any of these raw materials can be used. The carbonaceous fibers are produced by carbonizing these raw materials for the carbonaceous fibers.

The monofilaments constituting the carbonaceous fibers usually have a diameter of from 3 to 70 µm. It is preferred to use carbonaceous fibers having a monofilament diameter of from 6 to 50 µm, especially from 7 to 30 µm. Although carbonaceous fibers composed of monofilaments having a smaller diameter generally have high strength, there is no need of using such expensive carbonaceous fibers because the carbonaceous fibers to be used in the invention are not required to have especially high strength. Use of carbonaceous fibers composed of monofilaments having a large diameter is disadvantageous in that they tend to give woven fabrics having a higher degree of-unevenness of thickness.

The carbonaceous-fiber sheet to be used is preferably one reduced in fluffing from the standpoint of the electrical properties of the conductive carbonaceous-fiber sheet to be obtained. The degree of fluffing of a conductive carbonaceous-fiber sheet can be determined through the following fluff grade test of woven or non-woven fabric (QTEC Cello Tape method ("Cello Tape" is a registered trademark of Nichiban Co., Ltd.)).

The test is conducted in the following manner. An 18 mm-wide cellophane tape which, when bonded to a smooth plastic plate while applying a load of 40 gf/cm² thereto, has a peel strength in accordance with JIS L 1089 of 350±25 gf (e.g., Cello Tape CT-18 or LP-18, each having a width of 18 mm; manufactured by Nichiban Co., Ltd.) is applied to a fiber sheet as a test sample. A load of 40 gf/cm² is placed thereon for 5 seconds, and the tape is then stripped off. This operation is repeatedly conducted in the same machine or transverse direction with respect to five areas in the sheet surface using the same tape. The amount of the fluff which has adhered to the cellophane tape is judged based on comparison with the fluff grade test judgement scale (first to fifth grades) as prescribed by Japan Textile Products Quality and Technology Center (abbreviation, QTEC).

According to this method of evaluation, fiber sheets of the first grade are the largest in fluff amount and the amount of fluff decreases with increasing grade number. Fiber sheets of the fifth grade are the smallest in fluff amount. In the case where the grade of a sheet is intermediate between grade integers, e.g., between the second grade and third grade, it is referred to as grade 2-3 (grade 2.5).

Carbonaceous-fiber sheets having a fluff grade as determined by the fluff grade test of 2 or higher, especially 3-4 (3.5) or higher, are preferred. Although carbonaceous-fiber sheets having a fluff grade higher than 5 are desirable in performance, reducing the fluff amount to such a degree is not necessary for practical use.

The carbonaceous-fiber sheet to be used in the invention preferably has a fluff grade as determined by the fluff grade test of 2 or higher, more preferably 3 or higher, most preferably 3-4 (3.5) or higher. In case where a carbonaceous-fiber sheet having a fluff grade lower than 2 is used, the fluff of carbonaceous fibers protrudes from the surface of the conductive carbonaceous-fiber sheet and this tends to cause shortcircuiting when the sheet is used as a gas diffusion layer material in a fuel cell.

The conductive carbonaceous-fiber sheet of the invention is not particularly limited in properties as long as the thickness, weight per a unit area, bending resistance (L) , and volume resistivity thereof are within the respective specific ranges shown above. Usually, however, the sheet is preferably in such a state that the carbonaceous fibers are fused to one another or are bonded to one another with a binder or a product of carbonization thereof while retaining gas-diffusing properties.

This conductive carbonaceous-fiber sheet may be one formed from short carbon filaments alone, or from short carbon filaments and long carbon filaments, or from a mixture of short or long carbon filaments and one or more other carbon materials. It may be either a non-woven fabric obtained through bonding with a binder or a woven fabric. Non-woven fabrics necessitate a relatively large amount of a binder and are generally produced through pressing so as to impart a moderately small thickness and shape retention which are required of gas diffusion materials for fuel cells. Non-woven fabrics hence are relatively low in gas permeability, electrical conductivity, etc. and have relatively high stiffness. On the other hand, a carbonaceous-fiber woven fabric obtained by weaving carbon fibers to form a woven fabric and then fusing the carbon fibers to one another or bonding the carbon fibers to one another with a binder or a product of carbonization thereof is more preferred in that moderate stiffness can be obtained with a relatively small binder amount while securing gas permeability and electrical conductivity and that the woven fabric can be easily wound around a paper tube or the like into a roll.

The weave construction of the woven fabric is preferably plain weave, but may be twill weave, sateen weave, or any other weave construction. A preferred example of the woven fabric is a fabric obtained by weaving two-folded yarns having a metric number of from 20 to 60 composed of single fibers having a diameter of from 7 to 10 µm by plain weaving at a warp density and a weft density of from 30 to 70 yarns per inch each.

Metallic impurities present in the woven fabric are preferably diminished to the lowest possible level because the impurities can be a factor which, during fuel cell operation, accelerates hydrolysis of the water being generated and thereby reduces cell properties. For example, the contents of iron, nickel, and sodium are preferably 50 µg/g or lower, 50 µg/g or lower, and 100 µg/g or lower, respectively. A woven fabric reduced in the contents of metallic impurities can be obtained by washing a woven fabric, carbonaceous fibers to be used as a material for the fabric, raw fibers for the carbonaceous fibers, or the like with an acid such as hydrochloric acid or acetic acid.

Although the weave construction of the woven fabric is preferably plain weave, it may be any other weave construction such as, e.g., twill weave or sateen weave. The yarns to be used for producing the woven fabric may be either filament yarns or spun yarns. However, spun yarns are preferred in that a dense and even woven fabric structure is obtained therefrom and yarn productivity is high.

For obtaining spun yarns, any desired spinning technique can be used. Examples thereof include cotton spinning, 2-inch spinning, tow spinning, worsted spinning, and woolen spinning. Filament yarns obtained by separating large-tow filament yarns into yarns of an appropriate size can also be used in the invention.

The size of the yarns (yarn count) can not be unconditionally specified because it varies depending on weave construction and yarn input or mass of warps and wefts per unit area of fabric. In the case of single yarns, however, the size thereof in terms of metric number (Nm) is generally from 10 to 50 Nm, preferably from 15 to 30 Nm. In the case of two-folded yarns, the size thereof is generally from 2/20 to 2/100 Nm, preferably from 2/30 to 2/60 Nm.

The twist number of yarns is as follows. In the case of single yarns, the number of twists is generally from 300 to 800, preferably from 500 to 700, per meter of the yarn length. In the case of two-folded yarns, the number of final twists and the number of primary twists are generally from 300 to 800 and from 500 to 900, respectively, per meter of the yarn length, and are preferably from 400 to 750 and from 600 to 850, respectively, per meter.

The smaller the fluff number of yarns thus obtained, the more the yarns are preferred. Specifically, in the case where the woven fabric to be produced is for use as a gas diffusion layer material for fuel cells or in similar applications, the number of fluffs of 3 mm or longer as determined, for example, with an optical fluff counter is preferably 250 or smaller, more preferably 200 or smaller, per 10 m of the yarns. With respect to the lower limit of the fluff number, smaller values are preferred. However, at least ten fluffs or at least several tens of fluffs are usually present in filament yarns and spun yarns, respectively.

In the case where the yarns described above are subjected to plain weaving on a weaving machine, the yarn input (number of warps and number of wefts per unit length) varies depending on yarn diameter (yarn count). For example, in the case where two-folded yarns of 2/40 Nm are used as warps and wefts, the yarn input for each of the warps and the wefts is preferably from 150 to 300 yarns, more preferably from 180 to 250 yarns, per 10 cm of the woven fabric. Besides these woven fabrics, a woven fabric obtained using single yarns as warps or wefts and a woven fabric obtained using single yarns as both warps and wefts are included in examples of the woven fabric usable in the invention. The spaces between warps and wefts preferably have a size of from 10 to 150 µm in terms of the diameter of corresponding pores as measured with a scanning electron microscope, from the standpoint of securing water-holding/water-releasing properties during use as a gas diffusion material in PEMFCs.

A preferred example of the woven fabric is one obtained by weaving two-folded yarns having a metric number of from 20 to 60 composed of single fibers having a diameter of from 7 to 10 µm by plain weaving at a warp density and a weft density of from 40 to 70 yarns per inch each.

The conductive carbonaceous-fiber woven fabric of the invention can be produced by various processes. In one process, carbonaceous fibers described above are woven to obtain a woven fabric and a binder, preferably an organic binder such as a resin or pitch, is then adhered to the woven fabric to bond the constituent carbonaceous fibers thereof to one another.

The latter step can be conducted, for example, by the method which comprises immersing the woven fabric in a solution prepared by dissolving an organic binder in an appropriate solvent, e.g., water, methanol, acetone, toluene, xylene, quinoline, or N,N-dimethylformamide, to thereby adhere the organic binder to the woven fabric, subsequently drying the woven fabric, and then heating the fabric with a hot press, calender rolls, oven, or the like to cure the organic binder. The solution of an organic binder in which the woven fabric is to be immersed may have a concentration of generally about from 0.1 to 10% by weight, preferably about from 0.5 to 5% by weight. Besides being merely cured, the organic binder may be carbonized or even graphitized by further heating the woven fabric having the organic binder adherent thereto in an inert gas atmosphere such as nitrogen or argon.

Examples of the organic binder include phenolic resins, furan resins, polyphenylene resins, polyethylene, polystyrene, polyimides, polyamides, polyacrylonitrile, poly(vinyl alcohol), polyethylene glycol, poly(amide-imide)s, polyetherimides, polyetheretherketones, polycarbonates, acetal resins, poly(phenylene oxide), poly(phenylene sulfide), poly(butylene terephthalate), poly(ethylene terephthalate), bismaleimide resins, thermoplastic polyurethanes, ABS resins, AAS resins, poly(4-methylpentene-1), polybutene-1, acrylonitrile/styrene resins, poly(vinyl butyral), silicone resins, unsaturated polyester resins, diallyl phthalate resins, melamine resins, urea resins, cellulose, epoxy resins, polyesters, coal tar pitch, petroleum pitch, and mesophase pitch.

Also usable are rubber-like materials such as ethylene/propylene copolymer rubbers, polydienes, polyurethane rubbers, and natural rubber, poly(vinylidene chloride), polytetrafluoroethylene, poly(vinylidene fluoride), vinylidene fluoride/trifluoroethylene copolymers, fluororubbers such as vinylidene fluoride/hexafluoropropylene rubbers, fluoroethylene/vinyl ether copolymers (e.g., Lumiflon, manufactured by Asahi Glass Company), amorphous perfluororesins (e.g., Cytop, manufactured by Asahi Glass Company), thermoplastic fluororubbers (e.g., Daielthermoplastic, manufactured by Daikin Industries, Ltd.), and fluorine-containing resins such as flexible fluororesins (e.g., Cefral Soft, manufactured by Central Glass Co., Ltd.). Preferred of these are thermosetting materials. Especially in the case where the organic binder is to be carbonized after being adhered to the woven fabric, the binder should be a thermosetting material so as to retain its shape through carbonization. In the case where a thermoplastic material is used, a pretreatment such as, e.g., an oxidizing treatment, should be conducted prior to carbonization. The adhesion of the binder or a product of carbonization thereof to the carbonaceous-fiber sheet can be accomplished by immersing the carbonaceous-fiber sheet in a solution of the binder material or by applying the solution to the carbonaceous-fiber sheet.

In bonding the constituent carbonaceous fibers of the woven fabric to one another with a binder or a product of carbonization thereof in the invention, it is important to take care to prevent the binder or carbonization product from filling pores of the woven fabric and thereby reducing the gas-diffusing properties of the woven fabric.

For this purpose, the following two techniques are preferred.

Namely, it is preferred to use: (1) a technique in which the surface of the carbonaceous fibers is continuously coated with a relatively small amount of a binder or a product of carbonization thereof to thereby bond the fibers to one another; or (2) a technique in which the carbonaceous fibers are brought into discontinuous point contact with one another with a relatively large amount of a binder or a product of carbonization thereof.

The state of the surface of carbonaceous fibers being bonded with a binder or a product of carbonization thereof can be easily ascertained through examination of a scanning electron photomicrograph of the fiber sheet.

The technique (1) can comprise: immersing the woven fabric in a binder solution having a relatively low concentration of generally about from 0.1 to 10% by weight, preferably about from 0.5 to 5% by weight, to adhere the organic binder to the woven fabric, subsequently drying the woven fabric, and then curing the organic binder by heating with a hot press, calender rolls, oven, etc. Consequently, when an organic binder has been adhered in a large amount, the organic binder adhered should be carbonized. In the case where an organic binder is carbonized after adhesion to the woven fabric, this organic binder is preferably one which after carbonization leaves a residue in an amount of 20% or more, especially preferably from 40 to 65%. A powdery active carbon, activated carbon fibers, a porous carbon black such as Ketjen Black, or the like may be mixed with the binder and adhered to the woven fabric. Such ingredients may be incorporated in an amount of preferably about from 10 to 90% by weight, more preferably about from 30 to 80% by weight, based on the binder. The incorporation thereof is generally effective in heightening the stiffness of the conductive carbonaceous-fiber woven fabric finally obtained. In this case, the content of the binder or product of carbonization thereof in the carbonaceous-fiber sheet obtained is generally 0.01% by weight or higher, preferably 0.05% by weight or higher, and is generally 25% by weight or lower, especially 20% by weight or lower, desirably 10% by weight or lower, preferably 7% by weight or lower, more preferably 5% by weight or lower, most preferably 4% by weight or lower.

The technique (2), in which carbonaceous fibers are brought into discontinuous point contact with one another with a binder or a product of carbonization thereof, may be conducted in the following manner. First, a thermosetting resin such as, e.g., a phenolic resin, furan resin, unsaturated polyester resin, urea resin, epoxy resin, melamine resin, diallyl phthalate resin, or silicone resin is preferably selected as the binder or a material for carbonization product. In order to attain discontinuous point contact, this thermosetting resin is sprayed over or applied to the carbonaceous-fiber sheet in the form of a dispersion of fine semicured resin particles having an average particle diameter of generally 3 µm or larger, preferably 10 µm or larger and of generally 50 µm or smaller, preferably 30 µm or smaller (maximum particle diameter, generally 200 µm, preferably 150 µm; minimum particle diameter, generally 0.1 µm, preferably 0.5 µm). This sheet is suitably dried and pressed, and is then heated to completely cure the resin and thereby obtain the conductive carbonaceous-fiber woven fabric.

The term "semicured" means that when the resin is boiled in a large excess of methanol, the amount of the resin components which dissolve in the methanol is about from 30 to 97% by weight, especially about from 70 to 95% by weight. Although thermosetting resins, after complete cure, do not substantially dissolve in a large excess of methanol, they dissolve partly when complete cure has not been reached. Consequently, the amount of resin components dissolved can be used as a measure of the degree of cure.

The drying may be conducted at a temperature of generally from 50 to 170°C, preferably from 90 to 160°C. The heating for complete cure is conducted at a temperature not lower than the curing temperature of the thermosetting resin used. This heating temperature is generally from 120 to 400°C, preferably from 180 to 330°C.

Especially preferred of those thermosetting resins are semicured phenolic resins and semicured modified phenolic resins from the standpoints of heat resistance, chemical stability, electrical conductivity, etc.

When an organic binder has been adhered in a large amount, the organic binder adhered should be carbonized. In the case where an organic binder is carbonized after adhesion to the woven fabric, this organic binder is preferably one which after carbonization leaves a residue in an amount of 20% or more, especially preferably from 40 to 65%. A powdery active carbon, activated carbon fibers, a porous carbon black such as Ketjen Black, or the like may be mixed with the binder and adhered to the woven fabric. Such ingredients may be incorporated in an amount of preferably about from 10 to 90% by weight, more preferably about from 30 to 80% by weight, based on the binder. The incorporation thereof is generally effective in heightening the stiffness of the conductive carbonaceous-fiber woven fabric finally obtained. In this case, the content of the binder or product of carbonization thereof in the carbonaceous-fiber sheet obtained is generally 10% by weight or higher, preferably 20% by weight or higher, and is generally 40% by weight or lower, preferably 35% by weight or lower, more preferably 35% by weight or lower.

The cloth with enhanced stiffness obtained by using such a semicured thermosetting resin as a binder is preferred in that the increase in electrical resistance caused by a resin which not only bonds carbon fibers to one another but covers the surface of the fibers, as in the case of a liquid phenolic resin, is little in that cloth because the semicured resin can bond the carbonaceous fibers to one another through "point contact".

Besides being obtained by weaving carbonaceous fibers, the conductive carbonaceous-fiber woven fabric of the invention can be produced by weaving precursor fibers for carbonaceous fibers and then carbonizing and optionally further graphitizing the woven fabric obtained. A preferred process for this production is as follows. Polyacrylonitrile fibers, which are a direct precursor for polyacrylonitrile-based carbonaceous fibers, are heated to 200 to 300°C in air (= oxidizing treatment) to obtain oxidized fibers. The oxidized fibers are woven to obtain an oxidized woven fabric. This fabric is heated to 900 to 1,400°C in an inert gas atmosphere such as nitrogen or argon to carbonize the fibers. The fabric may be further heated to 1,400 to 3,000°C according to need to graphitize the fibers. Thus, a conductive carbonaceous-fiber woven fabric according to the invention can be obtained. The polyacrylonitrile fibers to be subjected to the oxidizing treatment may be either long fibers or short spun fibers, and may be either single yarns or two-folded yarns. During the oxidizing treatment, the fibers may be stretched to thereby improve toughness of the fibers.

In carbonizing or further graphitizing the woven fabric obtained by weaving the oxidized fibers for obtaining a conductive carbonaceous-fiber woven fabric according to the invention, it is possible to apply a binder to the resultant carbonaceous-fiber woven fabric to bond the constituent carbonaceous fibers of the woven fabric to one another in the same manner as described above. Alternatively, use may be made of a method in which an organic binder is applied to the oxidized fiber woven fabric prior to carbonization and then the woven fabric and the organic binder are carbonized simultaneously. As this organic binder may be used one suitably selected from those enumerated above. The carbonization of the oxidized fiber woven fabric may be conducted in an inert gas at a temperature of generally from 400 to 1,400°C, preferably from 600 to 1,300°C. From the standpoint of the electrical conductivity of the woven fabric, it is preferred to heat the fabric to 700°C or higher, more preferably 800°C or higher. In the case where graphitization is desired, this may be accomplished by further heating the woven fabric to 1,400 to 3,000°C, preferably 1,500 to 2,500°C.

A preferred embodiment of methods for weaving oxidized fibers and carbonizing the resultant woven fabric is to weave fibers which have undergone an insufficient oxidizing treatment and to cause the fibers, or even the monofilaments, constituting the woven fabric to fuse to one another during carbonization. In the ordinary production of carbonaceous fibers, an oxidizing treatment (a treatment for imparting non-melting properties in the case of pitch-based carbonaceous fibers) is sufficiently conducted in order to prevent the monofilaments from fusing to one another during carbonization. Because of this, the carbonaceous fibers finally obtained are almost free from fusion bonding. The oxidizing treatment (treatment for imparting non-melting properties) is a chemical reaction by which oxygen is introduced into the molecular structure of the pitch or polyacrylonitrile. This treatment is accomplished by keeping the fibers in contact with oxygen for several tens of minutes at a temperature which is generally from 200 to 300°C and is less than 400°C at the most. In general, the larger the amount of oxygen incorporated into the molecular structure, the higher the effect of preventing fusion during carbonization. The amount of oxygen necessary for fiber burning which is generally called LOI (limiting oxygen index) is generally used as a measure of that effect. It is said that oxidized fibers having an LOI value of from 35 to 40 should be used for producing carbonaceous fibers. In contrast, in the case where fibers are purposely fused as in the invention, it is preferred to use oxidized fibers having an LOI value of 35 or lower, especially 33 or lower, obtained by conducting an oxidizing treatment at a lower oxygen contact temperature or for a shorter oxygen contact period. However, since fibers having too small a value of LOI undergo excess fusion upon carbonization to give a brittle carbonaceous-fiber woven fabric, it is preferred to conduct an oxidizing treatment in such a manner as to result in an LOI value of 20 or higher, especially 25 or higher. When this carbonization in which fibers are fused to one another is conducted in combination with the bonding of fibers with a binder described above, then the fibers constituting the carbonaceous-fiber woven fabric can be fixed to one another with higher certainty.

Besides being obtained by weaving oxidized fibers, the conductive carbonaceous-fiber woven fabric of the invention can be produced by weaving polyacrylonitrile fibers themselves, which are a precursor for the oxidized fibers, to obtain a woven fabric and subjecting this woven fabric to an oxidizing treatment and carbonization and optionally to graphitization. In this case, an oxidized woven fabric having an LOI value within the preferred range shown above may be obtained by bringing the polyacrylonitrile woven fabric into contact with an oxidizing gas such as air, ozone, or nitrogen oxide or with sulfuric acid, nitric acid, or the like.

The conductive carbonaceous-fiber sheet obtained by any of the methods described above can be used, without any treatment, as a gas diffusion layer material in fuel cells. However, this sheet may be further processed before being used as a gas diffusion layer material. For example, the conductive carbonaceous-fiber woven fabric obtained above can be modified so as to have the functions of enabling the membrane electrode to retain a moderate amount of water, adsorptively removing impurities contained in the fuel or oxidizing agent fed to the cell, and thereby preventing the cell properties from decreasing. This can be achieved by bringing the conductive carbonaceous-fiber woven fabric into contact with water vapor or carbon dioxide having a temperature of about from 800 to 1,200°C or with air having a temperature of about from 300 to 500°C to gasify part of the carbonaceous material and thereby form micropores in the carbonaceous fibers. Namely, the woven fabric obtained above is converted to a woven fabric constituted of porous carbonaceous fibers. It is preferred that not only the conductive carbonaceous-fiber woven fabric obtained through this treatment for imparting porosity but also the conductive carbonaceous-fiber woven fabrics obtained by the various methods described above be finished by pressing so as to have an even and given thickness. Since the woven fabrics have moderate stiffness, the thickness thereof can be easily regulated by pressing.

The conductive carbonaceous-fiber sheet of the invention can be advantageously used as the gas diffusion layers of a fuel cell. For example, pastes each obtained by mixing a dispersion of polytetrafluoroethylene with a catalyst and carbon black are applied respectively on both sides of a solid polymer electrolyte membrane to obtain a multilayer structure composed of a solid polymer electrolyte membrane and catalyst layers. The conductive carbonaceous-fiber sheet according to the invention is bonded as a gas diffusion layer to each side of the multilayer structure, whereby a membrane electrode can be formed. The multilayer structure comprising a solid polymer electrolyte membrane and catalyst layers may be formed also by a method comprising applying pastes comprising a polytetrafluoroethylene dispersion, a catalyst, and carbon black to a release sheet to form catalyst layers and then bonding the catalyst layers to a solid polymer electrolyte membrane by hot pressing. Alternatively, use may be made of a method comprising applying the catalyst pastes respectively to conductive carbonaceous-fiber sheets according to the invention to form structures each composed of a gas diffusion layer and a catalyst layer and then bonding these structures to a solid polymer electrolyte membrane by hot pressing, whereby a membrane electrode can be formed. In any of these methods, the conductive carbonaceous-fiber woven fabric according to the invention can be easily handled because it has moderate stiffness.

The carbonaceous-fiber sheet according to the invention has excellent electrical conductivity and gas permeability and moderate stiffness and is hence suitable for use as a gas diffusion layer material for solid polymer electrolyte fuel cells and in power sources for motor vehicles and power sources for cogeneration power systems.

The invention will be explained below in more detail by reference to the following Examples, but the invention should not be construed as being limited thereto.

### EXAMPLE 1

Two-folded yarns (2/40 Nm) each composed of single yarns each obtained by collecting from 45 to 50 polyacrylonitrile-based long oxidized fibers (LOI value, 38) having a monofilament diameter of 8 µm with twisting were woven at a warp density and a weft density of 50 yarns and 46 yarns, respectively, per inch to obtain an oxidized plain weave fabric. This woven fabric was heated to 900°C in a nitrogen stream to carbonize it and then heated to 2,000°C in an argon atmosphere to conduct graphitization. The graphitized carbonaceous-fiber woven fabric obtained had a warp density of 70 yarns per inch (corresponding to 276 yarns per 10 cm) and a weft density of 54 yarns per inch (corresponding to 213 yarns per 10 cm).

The carbonaceous-fiber woven fabric obtained was immersed in an ethanol solution of a phenolic resin (resol type) having a concentration of 3% by weight. This woven fabric was dried at 100°C and then hot-pressed at 220°C to obtain a conductive carbonaceous-fiber woven fabric. The product thus obtained had a slightly larger phenolic resin amount per unit area than before the hot pressing because the carbonaceous-fiber woven fabric had shrunk slightly through the hot pressing after the phenolic resin impregnation. Properties of this conductive woven fabric are shown in Table 1.

### EXAMPLE 2

A conductive carbonaceous-fiber woven fabric was obtained in the same manner as in Example 1, except that a phenolic resin (resol type) solution having a concentration of 1.5% by weight was used. Properties of this woven fabric are shown in Table 1.

### EXAMPLE 3

A conductive carbonaceous-fiber woven fabric was obtained in the same manner as in Example 1, except that a phenolic resin (resol type) solution having a concentration of 6% by weight was used. Properties of this woven fabric are shown in Table 1.

### EXAMPLE 4

The conductive carbonaceous-fiber woven fabric obtained in Example 3 was heated to 900°C in a nitrogen stream to carbonize the phenolic resin adherent thereto. Properties of this woven fabric are shown in Table 1.

### EXAMPLE 5

An oxidized plain weave fabric obtained in the same manner as in Example 1 was heated to 900°C to carbonize it. This woven fabric was immersed in a phenolic resin (resol type) solution having a concentration of 6% by weight. Subsequently, the woven fabric was dried at 100°C, hot-pressed at 220°C, and then heated to 2,000°C in an argon atmosphere to conduct graphitization. Thus, a conductive carbonaceous-fiber woven fabric was obtained. Properties of this woven fabric are shown in Table 1.

### EXAMPLE 6

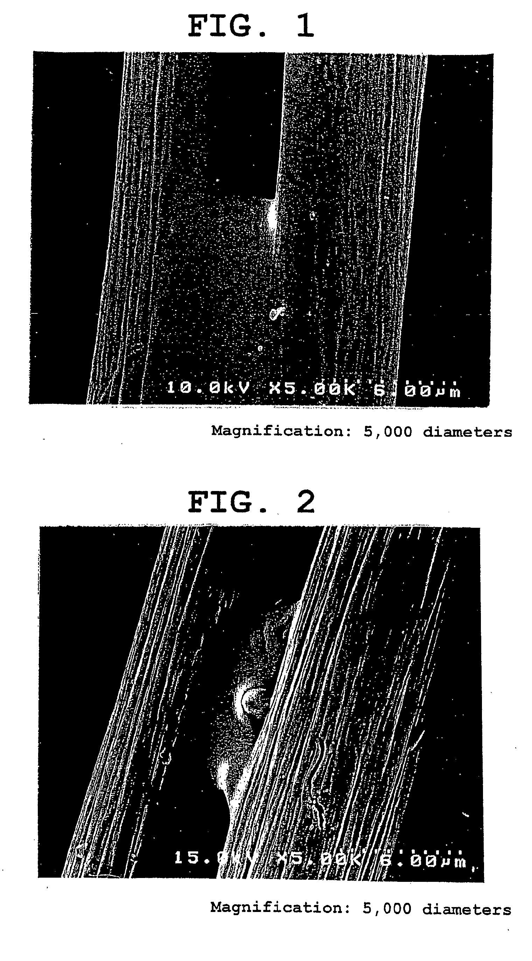

A conductive carbonaceous-fiber woven fabric was obtained in the same manner as in Example 1, except that a phenolic resin (resol type) solution having a concentration of 20% by weight was used. Properties of this woven fabric are shown in Table 1. A piece five millimeters square was cut out of the conductive carbonaceous-fiber woven fabric obtained, and a scanning electron photomicrograph thereof was taken. This is shown in Fig. 1.

### EXAMPLE 7

The graphitized carbonaceous-fiber woven fabric obtained in Example 1 was immersed in an aqueous dispersion of a semicured phenolic resin having a concentration of 10% by weight and an average particle diameter of 20 µm (the semicured phenolic resin had a degree of dissolution in boiling methanol of 95%). This woven fabric was dried at 100°C for 60 minutes and then hot-pressed at 300°C to obtain a conductive carbonaceous-fiber woven fabric. The product thus obtained had a slightly larger phenolic resin amount per unit area than before the hot pressing because the carbonaceous-fiber woven fabric had shrunk slightly through the hot pressing after the phenolic resin impregnation. Properties of this conductive woven fabric are shown in Table 1.

### EXAMPLE 8

A conductive carbonaceous-fiber woven fabric was obtained in the same manner as in Example 7, except that the aqueous dispersion of a semicured phenolic resin was replaced with an aqueous dispersion of a semicured phenolic resin (degree of dissolution in boiling methanol, 95%) having a concentration of 5% by weight and an average particle diameter of 20 µm. Properties of this woven fabric are shown in Table 1. A piece five millimeters square was cut out of the conductive carbonaceous-fiber woven fabric obtained, and a scanning electron photomicrograph thereof was taken. This is shown in Fig. 2.

### EXAMPLE 9

Oxidized polyacrylonitrile (PAN)-based fibers having an LOI value of 50 obtained by subjecting PAN fibers to an oxidizing treatment with air were spun to produce slivers. These silvers were subjected to fine spinning to obtain two-folded yarns having a metric number of 51 (2/51 Nm). The number of fluffs present on the yarns obtained was counted with a commercial optical fluff counter (SHIKIBO F-INDEX TESTER). As a result, the number of fluffs of 3 mm or longer was found to be 300 per 10 m of the yarns.

These two-folded yarns were used as warps and wefts to conduct plain weaving at a warp density and a weft density of 51 yarns and 45 yarns, respectively, per inch to obtain an oxidized woven fabric. This oxidized woven fabric was carbonized at 950°C in a nitrogen atmosphere and then graphitized at 2,300°C under vacuum to obtain a graphitized carbonaceous-fiber woven fabric. The graphitized carbonaceous-fiber woven fabric obtained had a warp density of 60 yarns per inch (corresponding to 236 yarns per 10 cm) and a weft density of 54 yarns per inch (corresponding to 213 yarns per 10 cm). This woven fabric had a weight per a unit area of 90 g/m² and a thickness of 0.24 mm.

The graphitized carbonaceous-fiber woven fabric thus obtained was treated in the same manner as in Example 7. Namely, the woven fabric was immersed in an aqueous dispersion of a semicured phenolic resin having a concentration of 10% by weight and an average particle diameter of 20 µm (the semicured phenolic resin had a degree of dissolution in boiling methanol of 95%). This woven fabric was dried at 100°C for 60 minutes and then hot-pressed at 300°C to obtain a conductive carbonaceous-fiber woven fabric. Properties of this woven fabric are shown in Table 1.

As apparent from Fig. 2, the resin ingredient was mostly in the form of spheres having a size of about from 1 to 10 µm and most of these spheres were present so as to bond carbon fibers to one another through "point contact". It was observed that the surface of the carbon fibers was not coated with the resin.

### COMPARATIVE EXAMPLE 1

The same procedure as in Example 1 was conducted, except that after a graphitized carbonaceous-fiber woven fabric was obtained, the subsequent treatment with a phenolic resin was omitted. Properties of this woven fabric are shown in Table 1.

### COMPARATIVE EXAMPLE 2

A conductive carbonaceous-fiber woven fabric was obtained in the same manner as in example 1, except that an ethanol solution of a phenolic resin (resol type) having a concentration of 40% by weight was used. Properties of this woven fabric are shown in Table 1.

### COMPARATIVE EXAMPLE 3

The same procedure as in Example 9 was conducted, except that after a graphitized carbonaceous-fiber woven fabric was obtained, the subsequent treatment with a phenolic resin was omitted. Properties of this woven fabric are shown in Table 1.

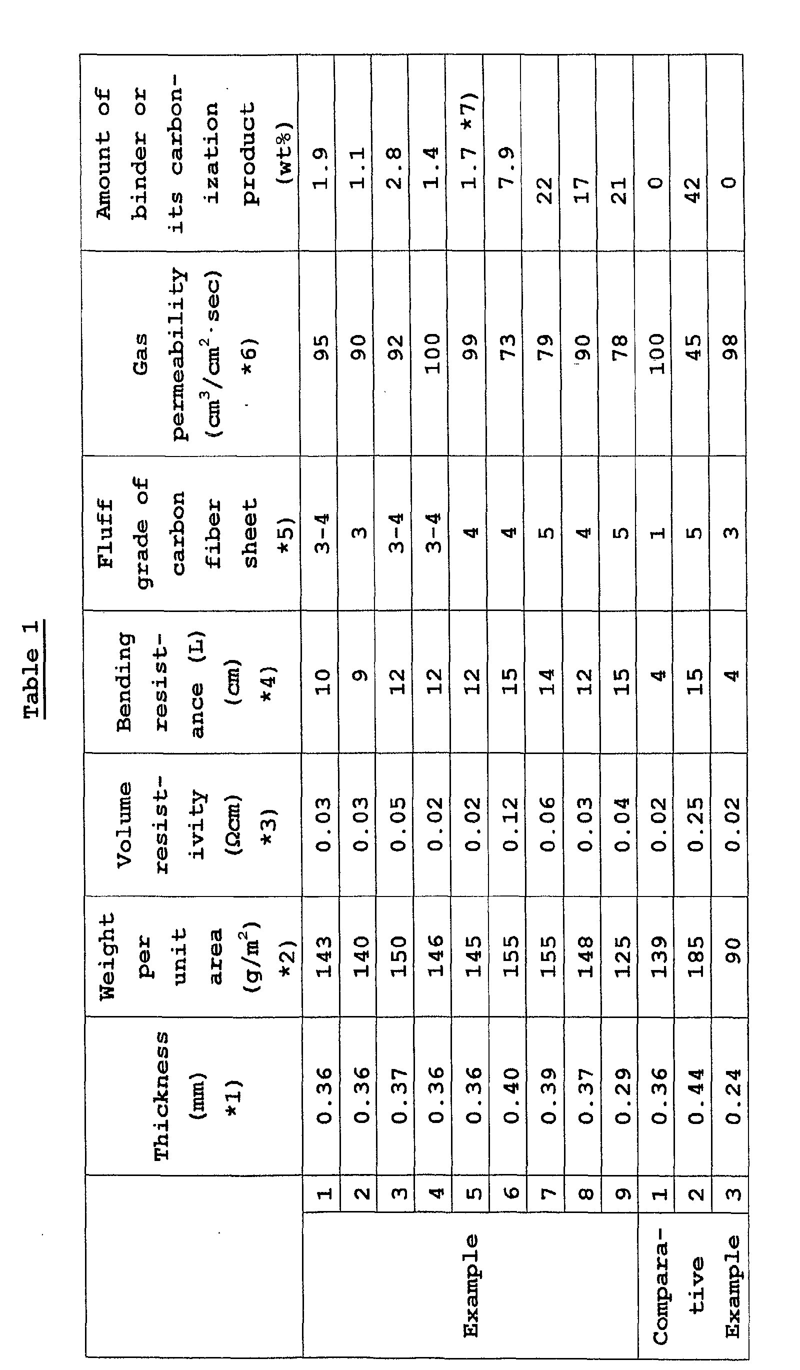

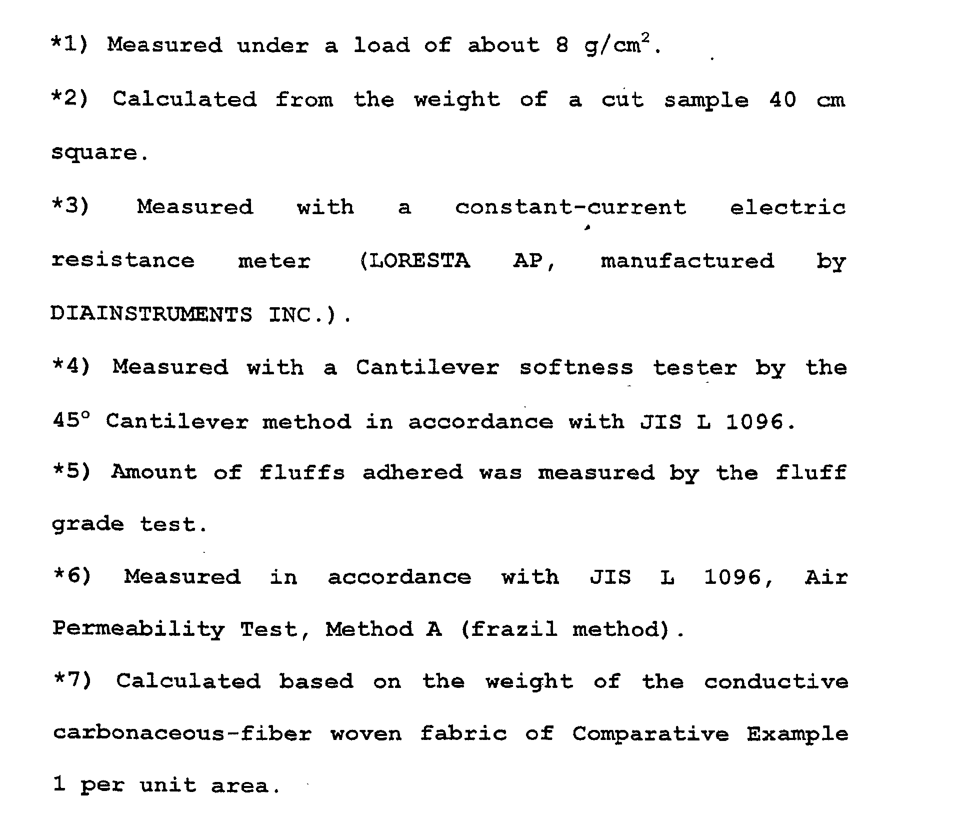

While the invention has been described in detail and with reference to specific embodiments thereof, it will be apparent to one skilled in the art that various changes and modifications can be made therein without departing from the spirit and scope thereof.

This application is based on Japanese patent application No. 2001-53855 filed on February 28, 2001, the entire contents thereof being hereby incorporated by reference.

## Claims

1. A conductive carbonaceous-fiber sheet which has a thickness of from 0.05 to 1 mm, a weight per a unit area of from 60 to 250 g/m², a bending resistance (L) as determined by the 45° Cantilever method of 6 cm or higher, and an in-plane volume resistivity of 0.2 Qcm or lower.

2. The conductive carbonaceous-fiber sheet as claimed in claim 1, which has an air permeability as determined in accordance with JIS L 1096, method A (frazil method) of from 50 to 150 cm³/cm²·sec, the air permeability being a measure of the gas-diffusing properties of the sheet.

3. The conductive carbonaceous-fiber sheet as claimed in claim 1 or 2 , which has a thickness of from 0.1 to 0.5 mm.

4. The conductive carbonaceous-fiber sheet as claimed in any of claims 1 to 3, which has a weight per a unit area of from 80 to 200 g/m².

5. The conductive carbonaceous-fiber sheet as claimed in any of claims 1 to 4, which has a bending resistance (L) as determined by the 45° Cantilever method of 8 cm or higher.

6. The conductive carbonaceous-fiber sheet as claimed in any of claims 1 to 5, which comprises carbonaceous fibers constituted of monofilaments having a diameter of from 6 to 50 µm.

7. The conductive carbonaceous-fiber sheet as claimed in any of claims 1 to 6, which has an in-plane volume resistivity of 0.07 Ωcm or lower.

8. The conductive carbonaceous-fiber sheet as claimed in any of claims 1 to 7, which comprises carbonaceous fibers fused to one another.

9. The conductive carbonaceous-fiber sheet as claimed in any of claims 1 to 8, which comprises carbonaceous fibers bonded to one another with a binder or a product of carbonization of the binder.

10. The conductive carbonaceous-fiber sheet as claimed in any of claims 1 to 9, which contains a binder or a product of carbonization of the binder in an amount of from 0.01 to 25% by weight and comprises carbonaceous fibers bonded to one another by surface coating with the binder or its carbonization product.

11. The conductive carbonaceous-fiber sheet as claimed in claim 10, which contains the binder or its carbonization product in an amount of from 0.01 to 7% by weight.

12. The conductive carbonaceous-fiber sheet as claimed in claim 1, which contains a binder or a product of carbonization of the binder in an amount of from 10 to 40% by weight and comprises carbonaceous fibers bonded to one another with the binder or its carbonization product through point contact.

13. The conductive carbonaceous-fiber sheet as claimed in claim 12, wherein the carbonaceous fibers are ones obtained by spraying or applying a dispersion of fine particles of a semicured thermosetting resin, optionally conducting drying, pressing or both of them, and then completely curing the resin.

14. The conductive carbonaceous-fiber sheet as claimed in any one of claims 1 to 13, which is a woven fabric.

15. The conductive carbonaceous-fiber sheet as claimed in any of claims 1 to14, which has a degree of fluffing of from the second to the fifth grade in terms of the index as determined through a fluff grade test.

16. A conductive carbonaceous-fiber woven fabric which has a thickness of from 0.05 to 1 mm, a weight per a unit area of from 60 to 250 g/m², a bending resistance (L) as determined by the 45° Cantilever method of 6 cm or higher, and an in-plane volume resistivity of 0.10 Qcm or lower.

17. The conductive carbonaceous-fiber woven fabric as claimed in claim 16, which has a thickness of from 0.1 to 0.5 mm.

18. The conductive carbonaceous-fiber woven fabric as claimed in claim 16 or 17 , which has a weight per a unit area of from 120 to 200 g/m².

19. The conductive carbonaceous-fiber woven fabric as claimed in any of claims 16 to 18, which has a bending resistance (L) as determined by the 45° Cantilever method of 8 cm or higher.

20. The conductive carbonaceous-fiber woven fabric as claimed in any of claims 16 to 19 , which comprises carbonaceous fibers constituted of monofilaments having a diameter of from 6 to 50 µm.

21. The conductive carbonaceous-fiber woven fabric as claimed in any of claims 16 to 20, which has an in-plane volume resistivity of 0.07 Ωcm or lower.

22. The conductive carbonaceous-fiber woven fabric as claimed in any of claims 16 to 21 which has a thickness of from 0.1 to 0.5 mm, a weight per a unit area of from 130 to 170 g/m², a bending resistance (L) as determined by the 45° Cantilever method of 8 cm or higher, and an in-plane volume resistivity of 0.06 Ωcm or lower.

23. The conductive carbonaceous-fiber woven fabric as claimed in any of claims 16 to 22, which comprises carbonaceous fibers fused to one another.

24. The conductive carbonaceous-fiber woven fabric as claimed in any of claims 16 to 23, which comprises carbonaceous fibers bonded to one another with a binder or a product of carbonization of the binder.

25. The conductive carbonaceous-fiber woven fabric as claimed in any of claims 16 to 24, which contains a binder or a product of carbonization of the binder in an amount of from 0.01 to 7% by weight and comprises carbonaceous fibers bonded to one another with the binder or its carbonization product.

26. The conductive carbonaceous-fiber woven fabric as claimed in any of claims 16 to 25, which comprises carbonaceous fibers which are a product of carbonization of acrylic fibers obtained by spinning a polymer comprising monomer units derived from acrylonitrile.

27. The conductive carbonaceous-fiber woven fabric as claimed in any of claims 16 to 26, which is produced through the steps of weaving a precursor of carbonaceous fibers and then carbonizing the woven material.

28. The conductive carbonaceous-fiber woven fabric as claimed in any of claims 16 to 27, which is a plain weave fabric.

29. The conductive carbonaceous-fiber woven fabric as claimed in any of claims 16 to 28, which has a degree of fluffing of from the second to the fifth grade in terms of the index as determined through a fluff grade test.

30. A solid polymer electrolyte fuel cell which employs the conductive carbonaceous-fiber sheet as claimed in any one of claims 1 to 13 and 15 as a gas diffusion layer material.

31. A solid polymer electrolyte fuel cell which employs the conductive carbonaceous-fiber woven fabric as claimed in any one of claims 16 to 29 as a gas diffusion layer material.

32. A motor vehicle having the solid polymer electrolyte fuel cell as claimed in claim 30 mounted therein.

33. A motor vehicle having the solid polymer electrolyte fuel cell as claimed in claim 31 mounted therein.

34. A cogeneration power system having the solid polymer electrolyte fuel cell as claimed in claim 30 installed therein.

35. A cogeneration power system having the solid polymer electrolyte fuel cell as claimed in claim 31 installed therein.

36. A solid polymer electrolyte fuel cell which employs the conductive carbonaceous-fiber sheet as claimed in claim 14 as a gas diffusion layer material.
